# EUROPEAN PATENT APPLICATION

(11) **EP 2 210 736 A1**
(43) Date of publication of application: **28.07.2010**
(21) Application number: 09151400.0
(22) Date of filing: 27.01.2009
(51) Int. Cl.: B32B 9/02, B32B 9/04, B32B 21/14, A47B 13/08, A47B 96/20

(54) **Table top plate**

(71) Applicant: Lammhults Möbel AB, 360 30 Lammhult (SE)
(72) Inventor: Johnson, Per-Evert, 360 30, Lammhult (SE)
(74) Representative: Simonsson, Erik

(57) **Abstract**

The present invention relates to a table top plate (101) comprising a supporting layer (103) and a surface layer (105). The table top plate (101) further comprises a sound absorbing layer (107) arranged between the supporting layer (103) and the surface layer (105), said sound absorbing layer (107) containing a cork material.

## Description

### Technical field

The present invention relates to a table top plate comprising a supporting layer and a surface layer.

### Technical background

Table top plates of the above mentioned type are widely used e.g. in conference tables. The supporting layer mainly serves to provide the table top with enough strength to withstand loads that the table top plate may be subjected to. The surface layer, which is arranged on top of the supporting layer, mainly serves to provide the table top plate with impact and abrasion resistance and to form an attractive finish of the table top plate. Typically, the supporting layer includes a wood fibre board and the surface layer often includes a wood veneer.

Such table top plates have the drawback that disturbing sounds are generated in response to mechanical impacts, e.g. when cups, plates, cuttlery, bottles etc. are placed on the table top plate, which may result in a noisy environment. Particularly, in conference rooms and dinner rooms, where a large number of tables are often present, impact sounds may contribute substantially to a noisy environment.

In order to reduce the problem concerning impact sounds a surface coating, such as laquer or varnish, may be applied to the table top plate surface. However, the use of such coating may be considered as being hazardous to the environment. Furthermore, the abrasion resistance of the table top plate may be reduced when such a coating is applied to the surface.

### Summary of the invention

It is an object of the present invention to overcome the above described drawbacks, and to provide an improved table top plate having sound absorbing characteristics.

This and other objects that will be apparent from the following summary and description are achieved by a table top plate according to the appended claims.

According to one aspect of the present invention, there is provided a table top plate that further comprises a sound absorbing layer arranged between the supporting layer and the surface layer, said sound absorbing layer containing a cork material. Due to the cork material arranged beween the supporting layer and the surface layer a sound absorbing table top plate is achieved. In case of mechanical impact to the table top plate the cork material absorbs sound in a very efficient manner and thus disturbing sounds can be avoided. Hence, a table top plate of this type may contribute to less noisy environments in e.g. conference rooms, dining rooms and kitchens or in other places where the table top may be used. A further advantage of the table top plate is that it may be formed from materials that can be recycled by means of incineration without being harmful to the environment. Also, at least the sound absorbing layer may be formed from a renewable material.

The sound absorbing layer is preferably bonded to the supporting layer as well as to the surface layer in order to further improve the sound absorbing effect and to provide a stable table top plate. The sound absorbing layer may be bonded to the supporting layer as well as to the surface layer by means of an adhesive, e.g. glue. Preferably, a glue that is not water based, such as a contact adhesive that is not suluble in water, is used in order to provide particularly good adhesion of the sound absorbing layer to the surface layer and the supporting layer and to provide for a cost-efficient production of table top plates.

Preferably, the sound absorbing layer is formed from a natural cork material. Thus, the sound absorbing layer is formed from a renewable material. The sound absorbing layer is preferably formed from a natural cork material having a thickness of at least 2 mm, more preferably a thickness of 2-10 mm and most preferably a thickness of 2-6 mm. Preferably, the sound absorbing layer is formed from a natural cork material having a density of 150-600 kg/m³.

The surface layer preferably comprises a material chosen from the group consisting of high pressure laminates, wood veneers and linoleum materials. Preferably, the surface layer has a thickness of at least 0,5 mm and more preferably a thickness of 0,5-4 mm.

The supporting layer may for instance comprise a wood board material, a metal sheet or a plastic sheet or a laminate comprising several sub-layers, such as wood boards and metalic sheets. Preferably, the supporting layer comprises a wood board material, such as a fibre board, a particle board, a block board, a sheet of plywood or a massive wood board. The supporting layer preferably has a thickness of 5-45 mm and more preferably a thickness of 15-40 mm.

Preferably, the supporting layer comprises a wood fibre board and more preferably a medium density fibre board (often called MDF) in order to provide a stable table top plate from a wood material. A table top plate comprising such a board further has the advantage that it may be mounted on, e.g., a frame structure or separate table legs in an easy and stable manner since such a board is capable of receiving fasteners, e.g. screws, in a proper manner. Even though the supporting layer and/or the surface layer thus may include compact material(s), disturbing sounds can be avoided due to the layer of cork material disposed between the supporting layer and the surface layer.

The supporting layer may include several sub-layers. Preferably, the supporting layer is formed from a laminate comprising two sub-layers and more preferably from a laminate comprising three sub-layers. This has the advantage that the stability of the table top plate may be further improved.

Sub-layers of the supporting layer may be formed from materials chosen in the group consisting of wood fibre boards, wood particle boards, block boards, plywood sheets, high pressure laminates, wood veneers, linoleum materials, metal sheets and plastic sheets.

A sub-layer of the supporting layer is preferably identical to the surface layer in order to improve the strength of the table top, e.g. to improve the resistance against bending of the table top plate.

Further advantages of the invention will be apparent from the following description and the appended claims.

### Brief description of the drawings

The present invention will now be described in more detail with the reference to the accompanying schematic drawings which shows embodiments of the invention and in which:
Fig. 1 shows a part of a table top plate according to a first embodiment of the present invention.
Fig. 2 shows a sectional view of a part of a table top plate according to a second embodiment of the present invention.

### Technical description

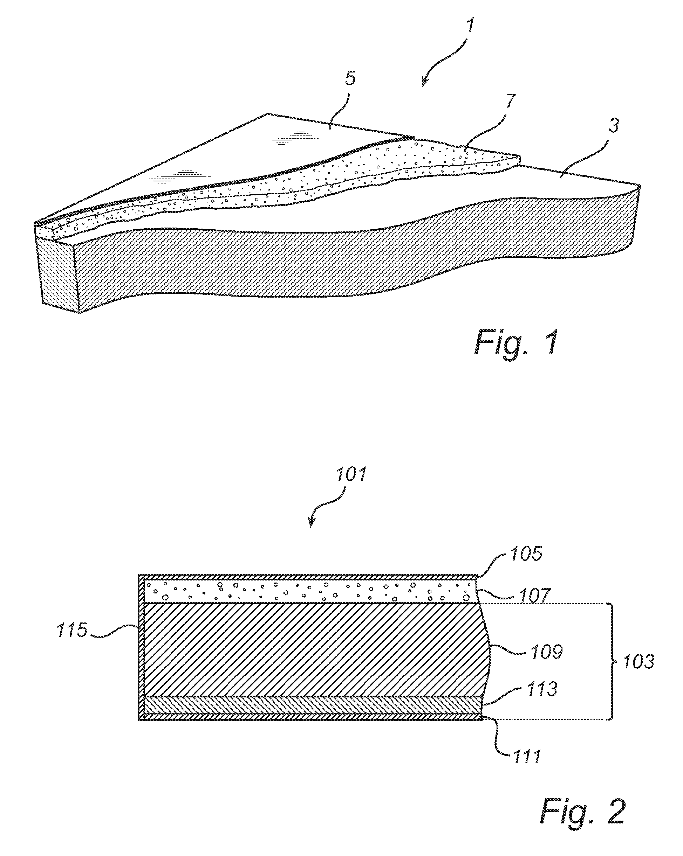

Fig. 1 shows a part of a table top plate 1 according to an embodiment of the present invention. The table top plate 1 comprises a supporting layer 3, a surface layer 5 and a sound absorbing layer 7 arranged therebetween. In this embodiment the supporting layer 3 is formed from a 38 mm thick medium density fibre (MDF) board and the surface layer 5 is formed from a 0,9 mm thick high pressure laminate. Preferably, the surface layer 5 is formed from a high pressure laminate having a thickness of 0,5-1,5 mm and more preferably from a high pressure laminate having a thickness of 0,7-1,2 mm is used.

The sound absorbing layer 7 is in this embodiment formed from a 3 mm thick sheet of a natural cork material. A natural cork material having a density of 200 kg/m³ was used. The sound absorbing layer 7 is bonded to the surface layer 5 as well as to the supporting layer 3 with adhesives. In this case a contact adhesive that is not soluble in water was used to bond the sound absorbing layer 7 to the supporting layer 3 as well as to the surface layer 5. Alternatively, white glue may be used for this purpose. The sound absorbing layer 7 may be formed from a sheet formed from pieces of natural cork that have been compacted and bonded together by means of a suitable adhesive. Alternatively, the sound absorbing layer 7 may be formed e.g. from a 5 mm thick sheet of natural cork material. Preferably, the sound absorbing layer 7 has a thickness of 2-10 mm and more preferably a thickness of 2-6 mm.

Table top plates according to embodiments of the present invention may be used to form a work surface in a variety of applications, e.g. in conference tables, dinner tables, bench and/or work surfaces in kitchens etc. It is realised that various requirements as regards the use of the table top, e.g. required load carrying capacity, mounting capabilities, environmental conditions, thus need to be considered in the design of a table top plate.

The supporting layer 3 mainly serves to provide the table top plate 1 with sufficient strength and/or durability. That is, e.g. load carrying capacity need to be considered when choosing the material(s) forming the supporting layer and the configuration thereof. For instance, a table top plate for mounting on a column support may need a higher resistance to bending loads compared to a table top plate for mounting on a frame structure having several attachment points distributed over a large area. In the case the table top plate is mounted on a stand or a column support the table top plate thus per se need to be able to carry more load.

The supporting layer 3, the surface layer 5 as well as the sound absorbing layer 7 may be formed in many alternative ways. Thus, a large number of embodiments are possible within the scope of the present invention.

In the following further embodiments of the present invention will be described.

Fig 2. shows a second embodiment of the present invention. In this embodiment a supporting layer 103 of a table top plate 101 includes a lower sub-layer 111, an upper sub-layer 109 and an intermediate sub-layer 113. Preferably, the upper sub-layer 109 has a thickness of 10-40 mm and more preferably a thickness of 15-35 mm and most preferably a thickness of 18-25 mm. The intermediate sub-layer 113 preferably has a thickness of 2-6 mm. The lower sub-layer 111 preferably has a thickness of 1-3 mm. The lower sub-layer 111 is in this case formed from a 1,5 mm thick oak veneer. The upper sub-layer 109 is in this case formed from a 22 mm thick medium density fibre (MDF) board and the intermediate sub-layer 113 from a 4 mm thick MDF board.

The intermediate sub-layer 113 may be bonded to the upper sub-layer 109 as well as to the lower sub-layer 111 by means of glue, such as white glue.

The surface layer 105 is preferably formed from wood veneer having a thickness of 1-3 mm. In this case the surface layer 105 is formed from a 1,5 mm thick oak veneer, i.e. identical to the type and thickness of wood veneer as used to form the lower sub-layer 111. A surface layer 105 formed from wood veneer having a thickness of about 1,5 mm is particularly preferable to provide a table top plate having good sound absorbing characteristics and which fulfills requirements as regards resitance to abrasion and impact. A too thin surface layer may result in a table top plate where mechanical impacts causes damage to the table top plate. On the other hand, a too thick surface layer may result in that the sound absorbing effect is limited.

Between the upper sub-layer 109 and the surface layer 105 a sound absorbing layer 107 is arranged. Preferably, the sound absorbing layer 7 has a thickness of 2-10 mm and more preferably a thickness of 2-6 mm. The sound absorbing layer 107 is in this case formed from a 3 mm thick sheet of natural cork material. Alternatively, the sound absorbing layer 107 may be formed e.g. from a 5 mm thick sheet of natural cork material. A natural cork material having a density of 200kg/m³ was used. The sound absorbing layer 107 is bonded to the upper sub-layer 109 as well as to the surface layer 105 by means of glue. In this case urea resin glue was used to bond the sound absorbing layer 107 to the surface layer 105. This type of glue is preferable for this purpose in order to avoid cracking of the wood veneer. A contact adhesive that is not soluble in water is preferably used to bond the sound absorbing layer 107 to the upper sub-layer 109. Alternatively, white glue may be used for this purpose. The sub-layers 111, 113 and 109 of the supporting layer 103, the sound absorbing layer 107 and the surface layer 105 are thus joined together in such a manner that they form a laminate.

In this embodiment the table top plate 101 further comprises a thin edge list 115, in the form of a 1 mm thick oak list, glued to an edge surface of the joined layers of the table top plate 101. The edge list 115 provides for protection of the edge surface and contributes to provide an attractive and/or homogeneous finish of the table top plate 101. The edge list 115, which is glued to side edges of the joined layers of the table top plate 101, extends from the lower sub-layer 111 of the supporting layer 103 to the surface layer 105, see Fig. 2. The edge list 115 thus covers the edge surface of the joined layers of the table top plate 101.

In a third embodiment (not shown) the configuration of the table top plate is similar to the one of the embodiment shown in Fig. 2. This embodiment mainly differs from the one shown in Fig. 2 in that each of the surface layer and the lower sub-layer is formed from high pressure laminate instead of wood veneer. Preferably, a high pressure laminate having a thickness of 0,5-1,5 mm and more preferably a thickness of 0,7-1,2 mm is used. A high pressure laminate having a thickness of 0,9 mm was used in this case.

In a fourth embodiment (not shown) the configuration of the table top plate is similar to the one of the embodiment shown in Fig. 2. This embodiment mainly differs from the one shown in Fig. 2 in that each of the surface layer as well as the lower sub-layer is formed from a linoleum material having a thickness of about 2,5 mm instead of high pressure laminate and in that the sound absorbing layer is formed from a 5 mm thick sheet formed from natural cork material. Using linoleum in the surface layer may even further improve the sound absorbing characteristics of the table top plate 101 due to the ability to absorb other sounds than impact sounds of linoleum materials, i.e. sounds generated in the surrounding of the table plate may also be absorbed. Preferably, a linoleum material having a thickness of 1,5-4 mm is used.

It will be appreciated that the described embodiments of the invention can be modified and varied by a person skilled in the art without departing from the inventive concept defined in the claims.

It is for instance realized that the surface layer as well as the sound absorbing layer also may include sub-layers.

## Claims

1. Table top plate (1; 101) comprising a supporting layer (3; 103) and a surface layer (5; 105)
**characterised in**
the table top plate (1; 101) further comprising a sound absorbing layer (7; 107) arranged between the supporting layer (3; 103) and the surface layer (5; 105), said sound absorbing layer (7; 107) containing a cork material.

2. Table top plate (1; 101) according to claim 1, wherein the sound absorbing layer (7; 107) is bonded to the supporting layer (3; 103) as well as to the surface layer (5; 105).

3. Table top plate (1; 101) according to any one of the preceding claims, wherein said sound absorbing layer (7; 107) is formed from a natural cork material.

4. Table top plate (1; 101) according to any one of the preceding claims, wherein the surface layer (5; 105) comprises a material chosen from the group consisting of high pressure laminates, wood veneers and linoleum materials.

5. Table top plate (1; 101) according to any one of the preceding claims, wherein the supporting layer (3; 103) comprises a medium density fibre board (109).

6. Table top plate (101) according to any one of the preceding claims, wherein said supporting layer (103) includes at least two material sub-layers (109, 111, 113).

7. Table top plate (101) according to any one of the preceding claims, wherein a sub-layer (111) of the supporting layer (103) is identical to the surface layer (105).

8. Table comprising a table top plate (1; 101) according to any one of the claims 1-7.
